# EUROPÄISCHE PATENTSCHRIFT

(11) **EP 2 067 590 B1**
(45) Veröffentlichungstag und Bekanntmachung des Hinweises auf die Patenterteilung: **11.09.2013**
(21) Anmeldenummer: 08021158.4
(22) Anmeldetag: 05.12.2008
(51) Int. Cl.: B28B 21/72, B28B 21/92, B28B 21/58, F16L 9/14, B32B 13/12, F16L 9/08

(54) **Verfahren zur Herstellung von Verbundrohren**
Method for producing composite pipes
Procédé de fabrication de tuyaux composites

(30) Priorität: 05.12.2007 DE 102007058885
(43) Veröffentlichungstag der Anmeldung: 10.06.2009
(73) Patentinhaber: J.H. & Wilhelm Finger GmbH & CO. KG, 35112 Fronhausen (DE)
(72) Erfinder: Schwarz, Achim, 35112 Fronhausen (DE); Franz, Martin, 35075 Gladenbach (DE)
(74) Vertreter: Buchhold, Jürgen

(56) Entgegenhaltungen:
- DE-A1- 2 852 007
- DE-A1- 4 127 992
- DE-U1- 29 700 398

## Beschreibung

Die Erfindung betrifft ein Verfahren zur Herstellung von Verbundrohren gemäß dem Oberbegriff von Anspruch 1.

In Abwassersystemen ohne extreme Umweltbelastungen werden gewöhnlich einfache Beton- oder Stahlbetonrohre eingesetzt. Unter bestimmten Bedingungen, wie z.B. beim Auftreten säurehaltiger oder aggressiver Abwässer, werden jedoch Rohre mit erhöhter Korrosionsbeständigkeit benötigt. Dazu werden Beton- oder Stahlbetonrohre mit einer korrosionsbeständigen Innenverkleidung aus Kunststoff versehen, die als Innenbeschichtung oder als Liner (Inliner) ausgebildet ist. Verwendet werden auch Auskleidungen aus Kunststoffplatten oder in Form von vorgefertigten Kunststoffrohren.

Einfache Beton- oder Stahlbetonrohre werden bevorzugt auf vollautomatischen Anlagen mit der so genannten Sofortentschalungstechnik hergestellt. Dabei wird erdfeuchter Beton mit hoher Rüttelenergie in einer Stahlschalung verdichtet. Anschließend werden sowohl die Innenform mit zusätzlichem Material durchdringt und damit die Korrosionsbeständigkeit erhöht. Bei Rollenkopfmaschinen entsteht das Verbundrohr durch Aufrollen einer inneren Schicht aus korrosionsbeständigem Material.

Von Nachteil hierbei ist, dass der apparative Aufwand für die Herstellung der Innenbeschichtungen bzw. Inliner sehr groß ist. Es sind spezielle Maschinen oder Vorrichtungen notwendig, die besondere Fachkenntnisse in der Handhabung erfordern; der Wartungsaufwand ist sehr hoch. All dies wirkt sich ungünstig auf die Herstellkosten aus.

Fertigungsverfahren, bei denen das Inlinerrohr nach dem Aushärten des Betons in das Rohr eingebracht wird, sind beispielsweise aus DE 26 34 992 A1 oder DE 78 15 282 U1 oder bekannt.

Problematisch hierbei ist, dass die Inliner unter Verwendung geeigneter Bindemittel oder Klebemittel mit dem Betonrohr verbunden werden müssen. Die Verarbeitung der Bindemittel ist nicht einfach und erfordert geschultes Fachpersonal. Bei unsachgemäßer Ausführung kann sich die Innenverkleidung von dem Betonrohr lösen, was zu Undichtigkeiten und damit zu nicht unerheblichen Umweltschäden führen kann.

Andere Verfahren sehen vor, dass zunächst der Inliner und anschließend das Betonrohr gefertigt wird. So stellt beispielsweise DE 75 34 245 U1 im Schleuderverfahren zunächst ein Korrosionsschutzrohr (Inliner) her, das nach dem Aushärten als innere Schalung für das Betonrohr verwendet wird. Der Inliner dient mithin als verlorene Schalung.

DE 197 45 599 C2 offenbart ein Verbundrohr mit einem äußeren Rohrteil aus Beton und einer Auskleidung aus einem Duroplast, wobei zwischen der Innenfläche des äußeren Rohrteils und der Auskleidung eine Schicht aus einem elastisch verformbaren Material vorgesehen ist. Das Verfahren zur Herstellung eines solchen Verbundrohres sieht vor, dass auch hier zunächst die Auskleidung hergestellt und teilweise ausgehärtet wird. Anschließend wird diese als verlorene Schalung eingesetzt und mit Beton umgossen.

In DE 198 55 572 A1 wird der Beton mit hoher Rüttelenergie in einer Schalung verdichtet. Diese umfasst eine Außenschalung und eine bewegliche Innenschalung, die kraftgesteuert solange mittels eines Antriebs expandiert wird, bis ein in das Betonrohr eingelegter Inliner eine definierte Kraft auf die Innenschalung ausübt.

In DE 198 55 572 A1 wird der Beton mit hoher Rüttelenergie in einer Schalung verdichtet. Diese umfasst eine Außenschalung und eine bewegliche Innenschalung, die kraftgesteuert solange mittels eines Antriebs expandiert wird, bis ein in das Betonrohr eingelegter Inliner eine definierte Kraft auf die Innenschalung ausübt.

Auch hier ist der apparative Aufwand sehr hoch. Durch besondere Maßnahmen muss sichergestellt werden, dass der Inliner dauerhaft fest und dicht in den Beton eingebunden ist.

Ein gattungsgemäβe Verfahren ist aus DE 285 2007 A1 bekannt.

Ziel der Erfindung ist es, ein Herstellungsverfahren für ein Verbundrohr zu schaffen, bei welchem die Arbeitsschritte bzw. der Arbeitsaufwand deutlich reduziert sind. Es soll insbesondere ohne besonderen apparativen Aufbau und ohne spezielle Fachkenntnisse einfach und kostengünstig durchführbar sein.

Ein weiterer Aspekt besteht darin, ein Verbundrohr zu schaffen, das mit einfachen Mitteln kostengünstig herstellbar ist und eine verbesserte Qualität aufweist. Es soll insbesondere robust ausgebildet sein, höheren Sicherheitsanforderungen genügen und sich modular aufbauen lassen.

Hauptmerkmale der Erfindung sind im kennzeichnenden Teil von Anspruch 1 angegeben. Ausgestaltungen sind Gegenstand der Ansprüche 2 bis 5.

Bei einem Verfahren zur Herstellung von Verbundrohren, insbesondere von Verbund-Liner-Rohren bestehend aus einem ersten Rohr aus Beton und einem zweiten Rohr aus einem korrosionsbeständigen Material, wird das erste Rohr in Schalungsbauweise mit einer Außenschale und einer Innenschale hergestellt. Anschließend wird das zweite Rohr an dem ersten Rohr angebracht, wobei das zweite Rohr an dem noch nicht ausgehärteten ersten Rohr angebracht wird, nachdem eine der Schalungen von dem ersten Rohr zumindest teilweise entfernt worden ist, so dass das erste Rohr einen zumindest teilweise schalungsbefreiten noch nicht ausgehärteten Teil, Abschnitt oder Umfang aufweist. An diesem wird das zweite Rohr angebracht.

Ferner ist vorgesehen, dass das erste Rohr ein Außenrohr und das zweite Rohr ein Innenrohr ist, wobei das Innenrohr nach Entfernen der inneren Schalung in das noch nicht ausgehärtete Außenrohr eingeschoben wird, und wobei die Außenmaße des zweiten Rohres innerhalb eines Toleranzbereiches, der bevorzugt in einem Bereich von etwa - 15% bis +15% Unterschied, weiter bevorzugt von etwa -10% bis +10% Unterschied, und am meisten bevorzugt von etwa -5% bis etwa +5% Unterschied liegt, den korrespondierenden Innenmaßen des ersten Rohres entsprechen.

Um eine dauerhaft stabile Verbindung zwischen dem ersten Rohr und dem zweiten Rohr zu realisieren, ist weiter vorgesehen, dass das erste Rohr aus einem Material ausgebildet wird, welches beim Aushärten sein Volumen und/oder seine Form in Richtung des zweiten Rohrs ändert, wobei der Toleranzbereich derart bemessen ist, dass nach dem Aushärten des Betons eine kraftschlüssige Verbindung zwischen dem ersten Rohr und dem zweiten Rohr entsteht.

Das erste Rohr ist bevorzugt als Betonrohr, als Stahlbetonrohr o.dgl. ausgebildet. Das zweite Rohr ist bevorzugt als Liner-Rohr ausgebildet, beispielsweise aus einem korrosionsbeständigen Kunststoff wie PVC. "Noch nicht ausgehärtet" bedeutet, dass das erste Rohr eine feuchte, vorgeformte und dehnbare Frischbetonröhre ist. Das zweite Rohr kann ein vorgefertigtes KG-Rohr mit vorgegebener Nennweite sein.

Nach dem Entfernen der inneren Schalung liegt der Innenumfang des Frischbetonrohres frei, der aufgrund seiner Erdfeuchte plastisch verformbar ist. Das Innenrohr lässt sich daher präzise und ohne großen Kraftaufwand in das Betonrohr einschieben. Der Inliner wirkt zudem innenseitig wie eine Nachbehandlungsschicht, so dass die innenseitige Betonschicht unter optimalen Bedingungen aushärten kann.

Auf diese Weise lassen sich beispielsweise Kanalrohre herstellen, die durch das Innenrohr korrosionsgeschützt und damit für den Transport von aggressiven Medien geeignet sind. Das Verbundrohr gewährleistet eine dauerhafte Beständigkeit, selbst in stark belasteten Kanalsystemen.

Durch das erfindungsgemäße Verfahren wird die Herstellung von korrosionsgeschützten Verbundrohren deutlich beschleunigt und vereinfacht. Beispielsweise lässt sich die erste Schalung bereits nach wenigen Minuten entfernen. Anschließend wird das zweite Rohr an dem noch feuchten ersten Rohr angebracht, was aufgrund der noch gegebenen plastischen Verformbarkeit des ersten Rohres problemlos möglich ist. Die verbliebene Schalung sorgt für die notwendige Stabilität des Rohrverbundes und erleichtert dessen Handhabung während des Fügevorgangs. Nach dem Anbringen des zweiten Rohres kann die zweite Schalung entfernt werden, beispielsweise nach nur wenigen Minuten oder sofort nach dem Anbringen des zweiten Rohres. Das Verbundrohr ist damit bereits fertig. Das Einbringen von Haftmitteln oder sonstigen Elementen zum Verbinden der Rohre ist nicht notwendig, was das Verfahren insgesamt vereinfacht. Zudem sind die Herstellkosten gegenüber herkömmlichen Verfahren deutlich geringer. Es werden keine aufwendigen Vorrichtungen benötigt, um den Liner mit dem Betonrohr zu verbinden. Das noch erdfeuchte Betonrohr und das vorgefertigte Liner-Rohr werden vielmehr einfach mechanisch ineinander geschoben. Aufwendige Vor- oder Nacharbeiten sind nicht erforderlich.

Das zweite Rohr, welches als stabiles, selbsttragendes Rohr ausgebildet sein kann, erhöht die Festigkeit des Verbundrohres bereits während der Herstellung, so dass sämtliche Schalungsteile entsprechend früh entfernt und wieder verwendet werden können. In Abhängigkeit von der Zeit bis zum Entfernen des ersten Schalungsteils lässt sich somit der gesamte Fertigungsprozess deutlich beschleunigen.

In einer Ausführungsform des Verfahrens ist vorgesehen, dass nach dem Anbringen des zweiten Rohrs die verbleibende Schalung sofort entfernt wird. Der eigentliche Fertigungsprozess ist damit bereits beendet. Das Rohr kann danach ohne weiteren Handlungsbedarf aushärten.

Das Anbringen des korrosionsbeständigen Rohres an dem ersten Betonrohr kann zum Beispiel derart erfolgen, dass nach dem Entfernen der entsprechenden Schalung das senkrecht stehende Frischbetonrohr an der verbliebenen Schalung angehoben wird, z.B. mittels eines Krans oder einer anderen Vorrichtung, und anschließend auf das ebenfalls senkrecht stehende zweite Rohr unter Ausnutzung der Gewichtskraft aufgesetzt und abgesenkt wird. Der Frischbeton ist noch elastisch und nimmt das zweite Rohr, dessen Außenmaße im Wesentlichen den korrespondierenden Innenmaßen des ersten Rohres entsprechen, problemlos auf. Die korrespondierenden Maße betreffen allgemein die Form, die Kontur, den Durchmesser u. dgl. der benachbart angeordneten Teile, Umfänge, Oberflächen und/oder Abschnitte des ersten und zweiten Rohres. Die Maße der entsprechenden Teile der Rohre sind bevorzugt gleich ausgebildet, d.h. die Maße entsprechen sich innerhalb eines Toleranzbereiches, der bevorzugt in einem Bereich von etwa -15% bis + 15% Unterschied, weiter bevorzugt von etwa -10% bis +10% Unterschied, und am meisten bevorzugt von etwa -5% bis etwa + 5% Unterschied liegt. Der Unterschied ist jeweils so bemessen, dass nach dem Aushärten des Betons eine kraftschlüssige Verbindung zwischen beiden Rohre entsteht. Weil der Frischbeton noch feucht ist, kann das zweite Rohr auf dem ersten Rohr gut gleiten, was den Fügevorgang weiter vereinfacht.

Die Wirkung des zweiten Rohres auf das erste Rohr entspricht dem einer Nachbehandlungsschicht, so dass die entsprechende Fläche des ersten Rohres, welche benachbart zu dem zweiten Rohr ist, unter optimalen Bedingungen aushärten kann. Insbesondere bewirkt dieses Verfahren einen beschleunigten Beton-Reifeprozess, der sich unter anderem in der helleren Betonfarbe gegenüber herkömmlich gefertigten Rohren zeigt. Beim Aushärten schrumpft das erste Rohr auf das innere zweite Rohr auf, wodurch ein dauerhaft zuverlässiger Kraftschluss zwischen dem ersten Rohr und dem zweiten Rohr zustande kommt. Damit wird ohne jedes Zusatzmaterial und ohne jedes Hilfsmittel ein stets kraftschlüssiger Verbund mit dem zweiten Rohr gebildet. Das Verbundrohr ist dauerhaft beständig.

Bevorzugt wird das Material für das erste Rohr aus einer Gruppe von Materialien ausgewählt, welche beim Aushärten schrumpfen, wobei das Material ein Beton oder ein Betongemisch ist. Als Material für das erste Rohr kann weiterhin Design-Beton verwendet werden. Zum Beispiel lässt sich Beton mit entsprechenden Additiven als Design-Beton verwenden.

Aufgrund des erfindungsgemäßen Verfahrens und der Verwendung von formverändernden Materialen können Verbindungsmittel oder Haftmittel wie Verbindungsschichten, Befestigungsmittel, Verankerungen, Schrauben, Ausschäumungen u. dgl. entfallen, um das erste Rohr mit dem zweiten Rohr sicher zu verbinden.

Wie bereits ausgeführt, kann das zweite Rohr jedes geeignete Material umfassen. Wichtig ist jedoch vorrangig, daß es beständig ist gegen das abzuführende Medium. In Betracht kommen daher Materialien wie Kunststoffe einschließlich PVC, Steinzeug, glasfaserverstärkter Kunststoff, Glas, Glaswerkstoffe u.dgl.

Bei einem Verbundrohr, insbesondere einem Verbund-Liner-Rohr mit einem Betonrohr und einem Liner-Rohr, ist vorgesehen, dass das Verbundrohr nach einem erfindungsgemäßen Verfahren hergestellt ist. Insbesondere kann das so hergestellte Verbundrohr noch Zusätze aufweisen. So kann das Verbundrohr beispielsweise eine dickere Wandung als herkömmlich hergestellte Rohre umfassen und eine glatte Muffe aufweisen. Die Dicke kann dabei in beliebigen Bereichen liegen.

Jedes Verbundrohr hat bevorzugt komplementär ausgebildete Enden, so dass sich zwei Verbundrohre mit den entsprechenden Enden ineinander fügen lassen. Jedes Verbundrohr bildet mithin ein Modul, mit dem sich beliebig lange Verbundrohr-Leitungen erstellen lassen.

Jedes Verbundrohr lässt sich überdies entsprechend seinem Anwendungszweck unterschiedlich ausbilden bzw. mit vorgebbaren Merkmalen ausstatten.

Eine Ausführung sieht dazu vor, dass das Verbundrohr als Basismodul ausgebildet ist. Beispielsweise kann das Basismodul als Standard-Stahlbetonrohr ausgebildet sein wie ein SB-Stahlbetonrohr nach DIN EN 1916 und DIN V 1201, sowie nach FBS Qualitätsrichtlinie DN 300, z.B. mit einer Wandstärke von etwa 76 mm und aus Beton C 40/50 gemäß Expositionsklasse XA 2.

In einer anderen Ausführungsform kann das Verbundrohr als Robustrohrmodul ausgebildet sein, welches in einer dickwandigen Bauweise hergestellt und mit ausreichendem Sicherheitsfaktor anhand wirklichkeitsnaher, statistischer Bemessungen ausgelegt ist. Die von der Norm abweichende Auslegung erfüllt dann die Anforderungen der üblichen Rohrverlegepraxis. Das Robustrohrmodul weist bevorzugt eine zylindrische Außenform auf, wodurch sich ein Ausheben von Muffenlöchern erübrigt. Ein so genanntes Muffenreiten lässt sich somit vermeiden.

In einem weiteren Schritt bzw. in einer weiteren Ausbaustufe kann das Verbundrohr mit Außenmarkierungen versehen sein. Es hat dann als Praxismodul z.B. eine Baulänge von etwa vier Metern und durchgehende Außenmarkierungen, die den Rohrauflagebereich von etwa 60° anzeigen. Durch die Außenmarkierungen wird dem Rohrleger eine baustellengerechte Ausbildung einer Bettungszone ermöglicht. Das Rohr lässt sich rasch und präzise positionieren und absetzen.

Weiterhin kann das Verbundrohr als Praxismodul - je nach Ausbaustufe - eine statische Biegebewehrung in Rohrlängsrichtung aufweisen, was zusätzlichen Belastungsspielraum bei der Rohrverlegung eröffnet, beispielsweise beim Einsatz von Schwermaschinen wie Baggern oder Kränen. Die Längsbewehrung kann beispielsweise als Stahl-Längsbewehrung ausgebildet sein, deren Bewehrungsstäbe sich in Rohrlängsrichtung erstrecken. Die Längsbewehrung kann ferner nahe beabstandet zu einer der Oberflächen des ersten Rohres angeordnet sein. Bevorzugt erstreckt sich die Längsbewehrung im Wesentlichen über die gesamte Länge des Verbundrohres.

In einer noch anderen Ausführungsform kann das Verbundrohr wenigstens einen Verlegeanker wie z.B. einen Kugelkopf-Verlegeanker umfassen, was die Handhabung des Rohres vereinfacht und die Verlegegeschwindigkeit erhöht. Der Verlegeanker ist bevorzugt seitlich am Rohr angebracht oder darin integriert.

Weiter können Press- oder Druckkissen in einem Muffen-Scheitelbereich oder in einem Seitenwandbereich vorgesehen sein, vorzugsweise integriert in das Verbundrohr. Hierdurch lassen sich Angriffspunkte z.B. für einen Baggerlöffel realisieren, wodurch das Rohr auch mit schweren Maschinen wie Baggern, Kränen u.dgl. gehandhabt werden kann, ohne dass es dabei beschädigt wird. Es können mehrere Druckkissen nebeneinander oder beabstandet voneinander vorgesehen sein.

Zudem kann das Praxismodul einen Muffengrund-Anschlag aufweisen, welcher zum Beispiel Betonabplatzungen bei einem Zusammenschieben von zwei Praxismodulen wirkungsvoll verhindert.

In noch einer weiteren Ausführungsform ist das Verbundrohr als Designmodul ausgebildet. Das Designmodul kann als Material für ein Rohr des Verbundrohres Design-Beton vorsehen, welcher nach einer Rezeptur mit entsprechenden Additiven hergestellt ist. Hierdurch wird ein vibrationsloses Verdichten von flüssigem Beton realisiert. Dabei erhärtet jedes Rohr in entsprechend entwickelten Gießformen. Mit dieser Fertigungstechnologie erhält man optisch ansprechende, glatte, feste, lunkerfreie und widerstandsfähige Betonoberflächen. Auch kann das Verbundrohr als Korrosionsschutzmodul ausgebildet sein. Hierbei ist ein formschlüssiger Kunststoff-Inliner vorgesehen, welcher das Verbundrohr entsprechend schützt. Der Kunststoff ist so ausgewählt, dass dieser einen wirkungsvollen Korrosions-schutz auch in einem pH-Bereich von etwa 1,0 bietet. Der Kunststoff bietet somit eine Widerstandsfähigkeit gegenüber biogener Schwefelsäure. Zudem kann eine zweite Dichtung in einem Verbindungsbereich des Inliners vorgesehen sein, so dass ein eigen-ständiges Rohr in dem Verbundrohr geschaffen ist.

In einer weiteren Ausbaustufe kann das Verbundrohr als High-Tech-Modul ausgebildet sein. Hierzu ist in das High-Tech-Modul eine Chip-Technologie integriert, beispielsweise ein Speicherchip zum Speichern und Auslesen von Daten. Auf diesem Chip lassen sich Rohr-, Herstellungs- und sonstige Daten speichern. Der Chip kann ein herkömmlicher Speicherchip oder ein RFID-Speicher sein. Dadurch ist es möglich, jedes Rohr jederzeit eindeutig mit einem entsprechenden Lesegerät zu identifizieren, was insbesondere im Rahmen der Verordnung über die Eigenkontrolle von Abwasseranlagen (EVKO) von besonderer Bedeutung ist. Zum Beispiel können mittels Funkverbindung zu einem Server alle Haltungsdaten abgefragt, ergänzt bzw. geändert werden. Über Standardtexte und Barcodes lassen sich auf einfache Weise Inspektionskontrollen mit Lesegeräten durchführen, die den Vorschriften und Verordnungen der Abwassertechnischen Vereinigung (ATV) bzw. der Deutschen Vereinigung für Wasserwirtschaft, Abwasser und Abfall (DVWK) entsprechen.

Um eine zuverlässige Durchleitung von Fluiden durch das Verbundrohr zu gewährleisten, ist vorgesehen, dass im Bereich der Muffen das erste Rohr gegenüber dem zweiten Rohr mittels mindestens einer Dichtung abdichtend gesichert ist. Bevorzugt sind mehrere Dichtungen vorgesehen, um eine sichere Abdichtung zu realisieren. Die Dichtungen sind bevorzugt in dem Bereich angebracht, in dem die Muffen an mindestens eines der Rohre angrenzen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Diese zeigen in Längsschnitten eine schematische Darstellung eines erfindungsgemäßen Herstellungsverfahrens für Verbundrohre. Dabei zeigen im Einzelnen:
- Fig. 1: einen Längsschnitt durch ein senkrecht stehendes, frisch entschaltes Betonrohr, das noch seine Außenschalung (Außenmantel) trägt;
- Fig. 2: in einem Längsschnitt schematisch einen dem Schritt gemäß Fig. 1 folgenden Schritt des erfindungsgemäßen Herstellungsverfahrens,
- Fig. 3: in einem Längsschnitt schematisch einen dem Schritt gemäß Fig. 2 folgenden Schritt des erfindungsgemäßen Herstellungsverfahrens,
- Fig. 4: in einem Längsschnitt schematisch einen dem Schritt gemäß Fig. 3 folgenden Schritt des erfindungsgemäßen Herstellungsverfahrens, insbesondere ein fertiges zum vollständigen Aushärten bereites Verbundrohr,
- Fig. 5: einen Längsschnitt durch ein anderes Ausführungsbeispiel eines Verbundrohres und
- Fig. 6: einen Querschnitt durch das Verbundrohr gemäß Fig. 5 entlang der Linie 1-1.

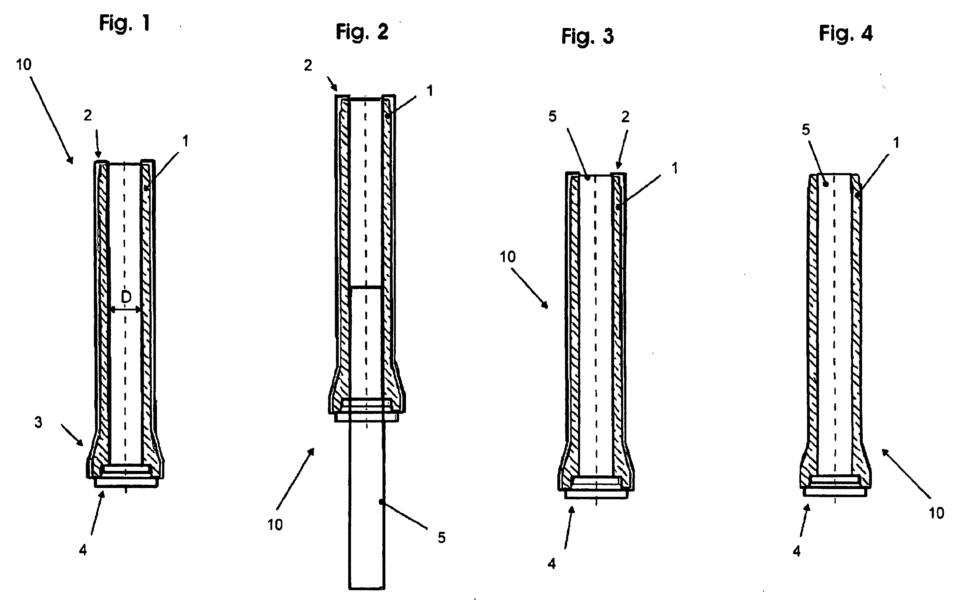

Fig. 1 zeigt in einem Längsschnitt schematisch einen Schritt eines erfindungsgemäßen Herstellungsverfahrens für Verbundrohre 10. In dem ersten Schritt wird ein erstes Rohr 1 mittels Schalungstechnik hergestellt. Das erste Rohr 1 ist als Frischbetonrohr ausgebildet. Dabei wird Frischbeton in eine Schalung mit einer inneren Schalung und einer äußeren Schalung gegossen. Eine innere Schalung (Kern) ist in der Darstellung gemäß Fig. 1 bereits entfernt. Die äußere Schalung 2 (Außenmantel) befindet sich noch am ersten Rohr 1. An einem unteren Ende 3 des Rohres 1 ist unter Beibehaltung eines konstanten inneren Rohrdurchmessers D eine Verbreiterung der Außenabmessung vorhanden. Entsprechend ist in diesem Bereich des unteren Endes 3 die Wandstärke stärker ausgebildet, so dass eine Stahluntermuffe 4 dort angeordnet werden kann. Diese Stahluntermuffe 4 unterstützt die Schalungstechnik und das untere Ende 3 ist aufgrund der speziellen Ausformung geeignet für den Anschluss an weitere Verbundrohre 10. Das erste Rohr 1 ist noch nicht ausgehärtet; der Beton ist noch erdfeucht und damit plastisch verformbar.

Fig. 2 zeigt in einem Längsschnitt schematisch einen dem Schritt gemäß Fig. 1 folgenden Schritt des erfindungsgemäßen Herstellungsverfahrens. In diesem Schritt wird von unten durch die Stahluntermuffe 4 hindurch ein zweites Rohr 5 in das noch nicht ausgehärtete erste Rohr 1 eingedrückt. Das zweite Rohr 5 ist ein Liner-Rohr, welches bevorzugt aus einem korrosionsbeständigen Kunststoff hergestellt ist. Die äußere Form und die äußeren Maße des zweiten Rohres 5 korrespondieren im Wesentlichen zu der inneren Form und den inneren Maßen des ersten Rohres 1, d.h. innerhalb eines Toleranzbereiches entsprechen sich die korrespondierenden Formen und/oder Maße der Rohre 1, 5.

Beim Eindrücken gleitet das zweite Rohr 5 in dem ersten Rohr 1, was durch den feuchten und verformbaren Zustand des ersten Rohres 1 unterstützt wird. Die äußere Schalung 2 ist noch vorhanden und verhindert ein Auseinanderdrücken des ersten Rohres 1. In dem dargestellten Zustand ist das zweite Rohr 5 zu etwa einem Drittel in das erste Rohr 1 eingedrückt.

Fig. 3 zeigt in einem Längsschnitt schematisch einen dem Schritt gemäß Fig. 2 folgenden Schritt des erfindungsgemäßen Herstellungsverfahrens. In dem dargestellten Schritt ist das zweite Rohr 5 vollständig in das erste Rohr 1 eingedrückt. Das erste Rohr 1 ist noch nicht vollständig ausgehärtet. Die äußere Schalung 2 befindet sich noch außen auf dem ersten Rohr 1.

Fig. 4 zeigt in einem Längsschnitt schematisch einen dem Schritt gemäß Fig. 3 folgenden Schritt des erfindungsgemäßen Herstellungsverfahrens. In diesem Schritt ist nun auch die äußere Schalung 2 von dem ersten Rohr 1 entfernt. Das zweite Rohr 5 befindet sich in dem ersten Rohr 1. Das äußere erste Rohr 1 kann in diesem Zustand nun vollständig aushärten. Es wird dabei durch den hydraulischen Abbindeprozess auf das zweite Rohr 5 aufgeschrumpft, so dass eine dauerhaft kraftschlüssige und stabile Verbindung zwischen dem ersten Rohr 1 und dem zweiten Rohr 5 entsteht. Das Verbundrohr 10 ist somit fertig gestellt. Nach Entfernen der Stahluntermuffe 4 lassen sich die so hergestellten Verbundrohre 10 zu einem Rohrverbund ineinanderfügen.

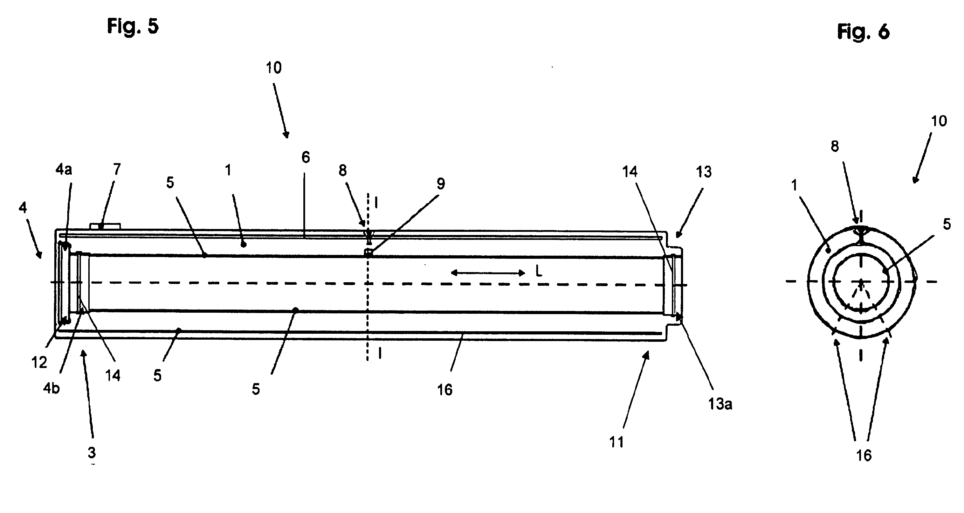

Fig. 5 zeigt in einer Schnittansicht ein weiteres Ausführungsbeispiel eines Verbundrohres 10 in horizontaler Lage. Das Verbundrohr 10 umfasst ein erstes äußeres Rohr 1 und ein zweites inneres Rohr 5. Letzteres ist vorliegend als Kunststoff-Inliner aus Kunststoff wie PVC, PP oder PE ausgebildet. Das erste Rohr 1 ist ein Betonrohr, genauer ein lunkerfreies SV-Betonrohr, mit einer integrierten Längsbewehrung 6, vorzugsweise aus Stahl, die sich entlang einer Rohrlängsrichtung L erstreckt.

Weiter umfasst das Verbundrohr 10 an einer äußeren Oberfläche des äußeren Rohrs 1 ein Druckkissen 7, welches integriert an dem Rohr 1 angebracht ist und einen Angriffspunkt für eine Handhabung des Verbundrohrs 10 bietet.

Etwa mittig ist an dem äußeren Rohr 1 ein Kugelkopfanker 8 angeordnet. Dieser dient ebenso der Erleichterung bei der Handhabung, insbesondere dem Verlegen, der Verbundrohre 10.

Etwa auf der Höhe des Kugelkopfankers 8 ist in dem Verbundrohr 10 ein Chip 9 vorgesehen. Dieser kann in das erste äußere Rohr 1 oder in das zweite innere Rohr 5 integriert sein. Auf dem Chip 9 lassen sich Daten über das Verbundrohr 10 speichern. Diese Daten können umfassen: Datum, Ort, Hersteller, Rohrverleger, Maße oder Material. Diese Daten können über geeignete Lesegeräte aus dem Chip 9 ausgelesen und weiterverarbeitet werden.

Das Verbundrohr 10 ist an beiden Enden geöffnet. Das untere Ende 3 weist dabei eine Muffe 4 auf, welche zur Aufnahme eines entsprechend ausgebildeten oberen Endes 11 1 eines zu verbindenden Verbundrohres 10 ausgebildet ist. Die Muffe 4 am unteren Ende 3 ist etwa doppel-ringförmig ausgebildet mit einem ersten Ringabschnitt 4a im äußeren Betonrohr 1 und mit einem zweiten Ringabschnitt 4b im Inlinerrohr 5. Man erkennt, dass der erste Ringabschnitt 4a im Betonrohr 1 einen größeren Außendurchmesser aufweist als der zweite Ringabschnitt 4b im Inlinerrohr 5. Ferner ist der Innendurchmesser des zweiten Ringabschnitts 4b größer als der Innendurchmesser des Inlinerrohres 5, so dass zum Ende hin jeweils eine Stufe entsteht. Das äußere Rohr 1 bildet innerhalb der Muffe 4 einen Anschlag 12, der das Aufnehmen eines zweiten Verbundrohrs 10 begrenzt.

Das in eine Muffe 4 aufzunehmende obere Ende 11 des Verbundrohres 10 weist am äußeren Rohr 1 einen verjüngten Absatz 13 auf, der von dem ersten Ringabschnitt 4a der Muffe 4 aufgenommen wird. Das Innenrohr 5 hat genau wie am unteren Ende 3 einen Ringabschnitt 13a, der einen etwas größeren Innendurchmesser aufweist als das Inlinerrohr 5, so dass auch hier zum Ende hin eine Stufe entsteht. Die Innendurchmesser der Ringabschnitte 4b und 13a sind gleich groß.

Beim Fügen zweier Verbundrohre 10 wird das erste Rohr mit seinem Absatz 13 in die Muffe 4 des anderen Rohres eingefügt, wobei der Absatz 13 an dem Ringanschlag 12 zum Anliegen kommt. Eine (nicht dargestellte) Gummidichtung dichtet die Betonrohre 1 gegeneinander ab. Sie sitzt bevorzugt zwischen dem ersten Ringabschnitt 4a der Muffe 4 und dem Absatz 13.

Die mit ihren Stirnkanten aneinander liegenden Inlinerrohre 5 werden von einer (nicht dargestellten) Ringhülse abgedichtet, die bevorzugt aus demselben Material gefertigt ist wie die Inlinerrohre 5. Sie wird beim Fügen der Verbundrohre 10 in die Ringabschnitte 4b, 13a der Enden 3, 11 eingesetzt und darin abgedichtet, z.B. mittels einer elastomeren Dichtung, durch Verkleben, durch Reibschluss oder durch Verschweißen. Die Wandstärke der Ringhülse entspricht der Höhe der Stufe zwischen dem Innendurchmesser der Ringabschnitte 4b, 13a und dem Innendurchmesser der Inlinerrohre 5. Der Innendurchmesser der Ringhülse entspricht dem Innendurchmesser der Inlinerrohre 5, so dass diese eine Rohrleitung mit durchgehend gleich bleibendem Innendurchmesser bilden. Jeder Ringabschnitt 4b, 13a kann mit einer Ringnut 14 versehen sein, in die eine zusätzliche Gummidichtung eingelegt wird. Auf diese Weise sind die Verbundrohre 10 stets dauerhaft dicht miteinander verbunden. Das in den Rohren 10 geführte Medium kann nicht nach außen dringen.

Fig. 6 zeigt einen Querschnitt durch das Verbundrohr gemäß Fig. 5 entlang der Linie 1-1. Das Verbundrohr 10 nach Fig. 6 weist einen kreisringförmigen Querschnitt auf. In das äußere Rohr 1 ist der Kugelkopfanker 8 etwa in 12-Uhr-Position integriert. In etwa 5-Uhr-Position und 7-Uhr-Position ist je eine Bettungs-Markierung 16 in Form eines Vorsprungs ausgebildet. Anhand dieser Bettungs-Markierung 16 lässt sich eine optimale Bettung des Verbundrohrs 10 realisieren. Zudem ist das kreisförmige Kunststoff-Inlinerrohr 5 dargestellt.

Die Erfindung ist nicht auf eine der vorbeschriebenen Ausführungsformen beschränkt, sondern in vielfältiger Weise abwandelbar. Man erkennt, dass ein Verfahren zur Herstellung von Verbundrohren 10, insbesondere zum Herstellen von Verbund-Liner-Rohren bestehend aus einem ersten Rohr 1 aus Beton und einem darin eingebrachten zweiten Rohr 5 aus korrosionsbeständigem Material, folgende Schritte umfasst:
■ Fertigung des ersten Rohrs 1 in Schalungsbauweise mit einer Außenschale 2 und einer Innenschale;
■ Einbringen des Betons in die Schalung;
■ ggf. Verdichten des Betons in der Schalung;
■ Entfernen der Innenschale vor dem Aushärten des Betons;
■ Einschieben des zweiten Rohres 5 in das noch erdfeuchte erste Rohr 1;
■ Entfernen der Außenschale 2 nach dem Aushärten des Betons.

In einem nicht dargestellten konkreteren Ausführungsbeispiel wurde nach dem Entfernen des Schalungskerns ein handelsübliches KG-Rohr 5 der Nennweite DN 400 unter Beibehaltung der Außenform in eine vorgeformte, noch erdfeuchte und damit plastisch verformbare Frischbetonröhre 1 eingeschoben. Anschließend wurde diese Einheit durch Entfernen des Außenmantels 2 vollständig entschalt. Das auf diese Weise hergestellte Verbundrohr zeigte weder nach der Sofortentschalung noch nach dem Aushärten Schäden oder Verformungen. Im Gegenteil: das Innenrohr 5 wirkt auf den Frischbeton wie eine Nachbehandlungsschicht, so dass die innenseitige Betonfläche unter optimalen Bedingungen aushärten kann. Das Innenrohr 5 sitzt als Inliner dauerhaft fest in dem Betonrohr 1.

Eine bevorzugte Ausführungsform sieht vor, dass das Verbundrohr ein erstes Rohr und ein daran angebrachtes zweites Rohr umfasst. Das Anbringen erfolgt dabei nach dem erfindungsgemäßen Verfahren. Dabei wird das zweite Rohr an dem noch nicht ausgehärteten ersten Rohr mittels geeigneter Verfahren angebracht. Danach härtet das erste Rohr komplett aus.

Ferner ist das erste Rohr ein Außenrohr und das zweite Rohr ein Innenrohr, welche über eine kraftschlüssige Verbindung, wie durch Aufschrumpfen, Presspassen und dergleichen, verbunden sind. Auf diese Weise lassen sich Verbundrohre herstellen, welche insbesondere für den Kanalbau verwendbar sind.

Bevorzugt ist das Verbundrohr so ausgebildet, dass das erste Rohr aus einem Material hergestellt ist, umfassend Beton, Stahlbeton, armierter Beton, Betongemischen und dergleichen. Das zweite Rohr ist bevorzugt aus Kunststoff ausgebildet und ist weiter bevorzugt ein Liner-Rohr, das heißt ein Überzug aus Kunststoff, bevorzugt in Form eines vorgefertigten Rohres.

Die Rohre können eine beliebige Querschnittsform aufweisen. So kann ein dreieckiger, quadratischer, polygoner, kreisrunder, elliptischer, eiförmiger oder sonstiger Querschnitt vorgesehen sein. Ist das erste Rohr als Außenrohr vorgesehen und das zweite Rohr als Innenrohr, so entsprechen die Innenmaße des ersten Rohres im Wesentlichen den Außenmaßen des zweiten Rohres. Die Querschnitte sind entsprechend korrespondierend ausgebildet, das heißt, ist der Querschnitt des Außenrohres kreisförmig, so ist der benachbarte Teil des Innenrohres dazu komplementär, das heißt ebenfalls kreisförmig. Genauer entsprechen sich die aneinander angrenzenden Konturen des Außenrohrs und des Innenrohrs.

In einer Ausführungsform ist entsprechend vorgesehen, dass das Verbundrohr endseitig mindestens eine Muffe aufweist. Bevorzugt weist das Verbundrohr an jedem Ende eine Muffe auf. Die Muffen sind dabei an die Innenkontur des entsprechenden Endes des Rohres angepasst. Bevorzugt setzen die Muffen einander fort, das heißt sie bilden bei einer Aneinanderreihung einen Fluidkanal.

### Bezugszeichenliste

- 1: erstes Rohr (Außenrohr)
- 2: äußere Schalung (Außenmantel)
- 3: unteres Ende
- 4: Stahluntermuffe
- 4a: erster Ringabschnitt
- 4b: zweiter Ringabschnitt
- 5: zweites Rohr (Innenrohr)
- 6: Längsbewehrung
- 7: Druckkissen
- 8: Kugelkopfanker
- 9: Chip
- 10: Verbundrohr
- 11: oberes Ende
- 12: Anschlag
- 13: Absatz
- 13a: Ringabschnitt
- 14: Ringnut
- 16: Bettungs-Markierung

- L: Rohrlängsrichtung

## Patentansprüche

1. Verfahren zur Herstellung von Verbundrohren (10), insbesondere von Verbund-Liner-Rohren bestehend aus einem ersten Rohr (1) aus Beton und einem zweiten Rohr (5) aus korrosionsbeständigem Material, umfassend die Schritte:
Fertigung des ersten Rohres (1) in Schalungsbauweise mit einer Außenschale (2) und einer Innenschale,
Anbringen des zweiten Rohrs (5) an dem ersten Rohr (1),
**dadurch gekennzeichnet,**
a) **dass** das zweite Rohr (5) an dem nicht ausgehärteten ersten Rohr (1) angebracht wird, wobei das Anbringen des zweiten Rohres (5) an dem ersten Rohr (1) den Schritt umfasst:
zumindest teilweises Entfernen einer der Schalungen von dem ersten Rohr (1), so dass das erste Rohr (1) einen zumindest teilweise schalungsbefreiten Teil aufweist, an dem das zweite Rohr (5) angebracht wird;
b) **dass** das erste Rohr (1) ein Außenrohr und das zweite Rohr (5) ein Innenrohr ist,
c) wobei das Innenrohr (5) nach Entfernen der inneren Schalung in das noch nicht ausgehärtete Außenrohr (1) eingeschoben wird, und
d) wobei die Außenmaße des zweiten Rohres (5) innerhalb eines Toleranzbereiches, der bevorzugt in einem Bereich von etwa -15% bis +15% Unterschied, weiter bevorzugt von etwa -10% bis +10% Unterschied, und am meisten bevorzugt von etwa -5% bis etwa +5% Unterschied liegt, den korrespondierenden Innenmaßen des ersten Rohres (1) entsprechen; und
e) **dass** das erste Rohr (1) aus einem Material ausgebildet wird, welches beim Aushärten sein Volumen und/oder seine Form in Richtung des zweiten Rohrs (5) ändert,
f) wobei der Toleranzbereich derart bemessen ist, dass nach dem Aushärten des Betons eine kraftschlüssige Verbindung zwischen dem ersten Rohr (1) und dem zweiten Rohr (5) entsteht.

2. Verfahren nach Anspruch 1, **dadurch gekennzeichnet, dass** nach dem Anbringen des zweiten Rohres (5) die verbleibende Schalung (2) entfernt wird.

3. Verfahren nach einem der vorherigen Ansprüche 1 bis 2, **dadurch gekennzeichnet, dass** das Material für das erste Rohr (1) aus einer Gruppe von Materialien ausgewählt wird, welche beim Aushärten schrumpfen.

4. Verfahren nach Anspruch 3, **dadurch gekennzeichnet, dass** das Material für das erste Rohr (1) Beton oder ein Betongemisch ist.

5. Verfahren nach einem der Ansprüche 1 bis 4, **dadurch gekennzeichnet, dass** das Material für das zweite Rohr (5) ausgewählt wird aus einer Gruppe geeigneter Materialien, umfassend: Kunststoff, Steinzeug, glasfaserverstärkte Kunststoffe, Glas und dergleichen.

## Claims

1. Method for producing composite pipes (10), particularly composite liner pipes consisting of a first pipe (1) of concrete and a second pipe (5) of corrosion-resistant material, comprising the steps of:
producing the first pipe (1) by the formwork method with an outer skin (2) and an inner skin,
attaching the second pipe (5) to the first pipe (1),
**characterised in that**
a) the second pipe (5) is attached to the first pipe (1) before the latter has finished hardening, the attachment of the second pipe (5) to the first pipe (1) comprising the step of:
at least partially removing one of the forms from the first pipe (1) so that the first pipe (1) has an at least partially formwork-free part to which the second pipe (5) is attached;
b) the first pipe (1) is an outer pipe and the second pipe (5) is an inner pipe,
c) the inner pipe (5) being pushed into the outer pipe (1) before the latter has finished hardening, after the removal of the inner form, and
d) the outer dimensions of the second pipe (5) corresponding to the corresponding internal dimensions of the first pipe (1) within a tolerance range that is preferably in the range from about -15% to +15% difference, more preferably from about -10% to +10% difference, and most preferably from about -5% to +5% difference; and
e) the first pipe (1) being formed from a material that changes in volume and/or shape towards the second pipe (5) as it hardens,
f) the tolerance range being such that after the hardening of the concrete a frictionally locking bond is formed between the first pipe (1) and the second pipe (5).

2. Method according to claim 1, **characterised in that** after the attachment of the second pipe (5) the remaining form (2) is removed.

3. Method according to one of the preceding claims 1 to 2, **characterised in that** the material for the first pipe (1) is selected from among a group of materials that shrink on hardening.

4. Method according to claim 3, **characterised in that** the material for the first pipe (1) is concrete or a concrete mixture.

5. Method according to one of claims 1 to 4, **characterised in that** the material for the second pipe (5) is selected from among a group of suitable materials, comprising: plastics, vitrified clay, fibre-glass reinforced plastics, glass and the like.

## Revendications

1. Procédé de fabrication de tubes composites (10), en particulier de tubes de gainage composites composés d'un premier tube (1) en béton et d'un deuxième tube (5) en matériau résistant à la corrosion, comprenant les étapes suivantes :
fabrication du premier tube (1) dans le mode de fabrication en coffrage avec une coque extérieure (2) et une coque intérieure,
mise en place du deuxième tube (5) sur le premier tube (1),
**caractérisé en ce que**
a) le deuxième tube (5) est mis en place sur le premier tube (1) non encore durci, la mise en place du deuxième tube (5) sur le premier tube (1) comprenant l'étape suivante :
enlèvement au moins partiel d'un des coffrages du premier tube (1) de telle sorte que le premier tube (1) présente une partie au moins partiellement dépourvue de coffrage sur laquelle le deuxième tube (5) est mis en place ; **en ce que**
b) le premier tube (1) est un tube extérieur et le deuxième tube (5) est un tube intérieur,
c) le deuxième tube (5), après l'enlèvement du coffrage intérieur, étant inséré dans le premier tube (1) non encore durci, et
d) à l'intérieur d'une plage de tolérance qui se situe de préférence dans une plage d'environ -15 % à +15 % de différence, de façon plus préférée d'environ -10 % à +10 % de différence, et de façon la plus préférée d'environ - 5 % à +5 % de différence, les dimensions extérieures du deuxième tube (5) correspondant aux dimensions intérieures correspondantes du premier tube (1) ; et **en ce que**
e) le premier tube (1) est réalisé dans un matériau qui, lors du durcissement, modifie son volume et/ou sa forme en direction du deuxième tube (5),
f) la plage de tolérance étant dimensionnée de telle sorte que, après le durcissement du béton, il apparaît un raccordement par liaison de force entre le premier tube (1) et le deuxième tube (5).

2. Procédé selon la revendication 1, **caractérisé en ce que**, après la mise en place du deuxième tube (5), le coffrage (2) restant est enlevé.

3. Procédé selon une des revendications précédentes 1 à 2, **caractérisé en ce que** le matériau pour le premier tube (1) est sélectionné parmi un groupe de matériaux qui présentent un retrait lors du durcissement.

4. Procédé selon la revendication 3, **caractérisé en ce que** le matériau pour le premier tube (1) est du béton ou un mélange de béton.

5. Procédé selon une des revendications 1 à 4, **caractérisé en ce que** le matériau pour le deuxième tube (5) est sélectionné parmi un groupe de matériaux appropriés comprenant : matière plastique, grès, matières plastiques renforcées de fibre de verre, verre et similaires.
